(19) Europäisches Patentamt
European Patent Office
Office européen des brevets

(11) EP 4 580 077 A1

(12) EUROPEAN PATENT APPLICATION
published in accordance with Art. 153(4) EPC

(43) Date of publication:
02.07.2025 Bulletin 2025/27

(51) International Patent Classification (IPC):
H04B 7/0404 (2017.01)

(21) Application number: 23884631.5

(22) Date of filing: 23.10.2023

(52) Cooperative Patent Classification (CPC):
H04B 7/0404; H04B 7/0408; H04B 7/0413;
H04B 7/06

(86) International application number:
PCT/CN2023/125938

(87) International publication number:
WO 2024/093699 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.10.2022 CN 202211365539

(71) Applicant: Huawei Technologies Co., Ltd.
Shenzhen, Guangdong 518129 (CN)

(72) Inventors:
• ZHANG, Qingchuan
Shenzhen, Guangdong 518129 (CN)
• ZHU, Xiaolong
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **CHANNEL ALLOCATION METHOD, AND RELATED APPARATUS**

(57) Embodiments of this application disclose an antenna channel allocation method and a related apparatus, to resolve a problem of a narrow beam sweeping range or a beam gain loss. The method in embodiments of this application includes: calculating degrees of freedom of horizontal channels based on an effective antenna array aperture and a system operating wavelength; dividing a quantity of available channels by the degrees of freedom of the horizontal channels and then performing rounding up, to obtain degrees of freedom of vertical channels; arranging a matrix based on the degrees of freedom of the horizontal channels and the degrees of freedom of the vertical channels, and calculating degrees of freedom of required channels of the matrix; calculating a difference between the degrees of freedom of the required channels and the degrees of freedom of the available channels, to obtain degrees of freedom of vacant channels; and symmetrically deducting several degrees of freedom of channels at two ends in a horizontal direction, to obtain a method for allocating the degrees of freedom of the available channels, in which there are more degrees of freedom in a middle column and there are fewer degrees of freedom in a side column.

EP 4 580 077 A1

FIG. 4A

CONT.
FROM
FIG. 4A

~

Divide the quantity of vacant channels into Z groups, where each group includes n channels, Z is an even number greater than 0 and less than X, and n is a natural number — 409

Deduct n channels separately from first Z/2 columns and last Z/2 columns of the matrix — 410

Calculate a pilot transmission weight value of a first beam in a middle column with Y channels, where the pilot transmission weight value of the first beam meets: Beamforming effect, implemented based on the pilot transmission weight value of the first beam, of a two-dimensional codebook-based beam is optimally close to beamforming effect implemented when the quantity of vertical channels is 2 — 411

Separately calculate pilot transmission weight values of other Y−1 beams in the middle column based on the first pilot transmission weight value — 412

Calculate pilot transmission weight values of a side column with Y−n channels based on pilot transmission weight values of the middle column, where the pilot transmission weight values of the side column meet: Beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam — 413

FIG. 4B

**Description**

This application claims priority to Chinese Patent Application No. CN202211365539.8, filed with the China National Intellectual Property Administration on October 31, 2022 and entitled "CHANNEL ALLOCATION METHOD AND RELATED APPARATUS", which is incorporated herein by reference in its entirety.

**TECHNICAL FIELD**

This application relates to a massive multiple-input multiple-output system, and in particular, to a channel allocation method and a related apparatus.

**BACKGROUND**

In current 4G and 5G wireless communication systems, a multiple-antenna technology is a most critical technology for improving wireless air interface performance. A larger quantity of antennas and degrees of freedom of channels indicates more obvious performance gains provided by the multiple-antenna technology. Currently, commercial deployment is evolving from a multiple-antenna technology represented by 4T4R (2 transmit 2 receive, 2 transmit 2 receive) and 8T8R (8 transmit 8 receive, 8 transmit 8 receive) to a massive multiple-input multiple-output (massive MIMO, MM) system. Intermediate frequencies 1.8 GHz and 2.1 GHz in frequency division duplex (Frequency Division Duplex, FDD) are used as examples. An industry-recognized MM system typically includes 32 TRX (32 TRX) ports and corresponding antennas, and can provide powerful beamforming and spatial multiplexing gains.

Typically, a dual-polarized 32 TRX architecture based on degrees of freedom of 8 horizontal channels and degrees of freedom of 2 vertical channels is used in the industry, to form an intermediate frequency MM system. In this case, because there are 8 channels in a horizontal direction to drive the antennas, a strong horizontal beamforming capability can be obtained. However, only 2 channels are allocated for vertical-dimensional beamforming. This results in a limited gain of a vertical beam and a limited beam coverage area. A current conventional solution limits performance gains of the entire MM system, especially in vertical-dimensional sensitive scenarios, such as a densely populated urban area and high-rise building coverage.

Therefore, how to provide a method for allocating degrees of freedom of channels, to allow the MM system to better support vertical beamforming in terms of a multiple-antenna hardware capability and maintain an optimal horizontal beamforming capability as well, is a technical problem to be urgently resolved by a person skilled in the art.

**SUMMARY**

Embodiments of this application provide a channel allocation method and a related apparatus, to resolve a problem of a narrow beam sweeping range or a beam gain loss.

According to a first aspect, this application provides a channel allocation method, applied to a wireless communication system, including the following.

An effective antenna array aperture and a system operating wavelength are obtained. The effective antenna array aperture and the operating wavelength of an MM system are obtained, to calculate a proper quantity of channels. When horizontal and vertical arrangement of channels on an antenna array is determined, degrees of freedom of the channels are allocated in space.

A quantity X of horizontal channels that are within a range of the effective antenna array aperture and that conform to a half-wavelength principle is calculated based on the system operating wavelength, where X is an integer greater than 2. Antenna channel arrangement with a 0.5 wavelength spacing can achieve desired beamforming effect and a proper beam sweeping range, which meets a coverage requirement on a horizontal surface. Therefore, degrees of freedom of the horizontal channels are selected based on the half-wavelength principle. The quantity X of horizontal channels obtained through calculation indicates a quantity of channels in each row.

A quantity of available channels of the system is obtained. After the quantity of channels in a horizontal direction is determined, a quantity of channels in a vertical direction may be obtained through calculation by obtaining the quantity of available channels of the system.

The quantity of available channels is divided by the quantity of horizontal channels and then rounding up is performed, to obtain a quantity Y of vertical channels. The quantity of available channels is divided by the quantity of horizontal channels and then rounding up is performed, to obtain the quantity Y of vertical channels. It may be understood that the quantity Y of vertical channels is actually a maximum quantity of channels in the vertical direction.

A matrix whose quantity of channels in a horizontal direction is X and whose quantity of channels in a vertical direction is Y is arranged, and a product of X and Y is calculated, to obtain a quantity of required channels. Because rounding up is used when the quantity Y of vertical channels is calculated, a quantity of antenna channels in horizontal X columns and antenna channels in vertical Y rows may be greater than the quantity of available channels. In addition, the product of X and Y needs to be calculated, to obtain the quantity of required channels.

If the quantity of required channels is equal to the quantity of available channels, antenna channels are allocated based on the X×Y matrix. If a quotient obtained after the quantity of available channels is divided by the quantity of horizontal channels is an integer, the antenna channels are directly allocated based on the X×Y matrix, thereby implementing efficient allocation of channel resources in horizontal and vertical dimensions.

If the quantity of required channels is greater than the quantity of available channels, a difference between the quantity of required channels and the quantity of available channels is calculated, to obtain a quantity T of vacant channels. If a quotient obtained after the quantity of available channels is divided by the quantity of horizontal channels is not an integer, because rounding up is performed, a case in which the quantity of required channels is greater than the quantity of available channels may appear. That is, total degrees of freedom of the available channels are less than a quantity of channels required by even arrangement in the horizontal X columns and the vertical Y rows. Therefore, the quantity T of vacant channels is calculated.

If T is an odd number, the quantity of vertical channels is increased by 1, and the quantity of required channels is recalculated. The quantity of vacant channels needs to be deducted from the evenly arranged channel matrix, to obtain a final channel allocation solution. A deduction method is to evenly remove the quantity T of vacant channels from two ends of the matrix. Because a symmetry principle is also important in allocation of degrees of freedom of channels, and is beneficial for a beam formed by the MM system to have a good waveform characteristic, if T is an odd number, it is impossible to implement even symmetrical reduction of degrees of freedom at two ends in the horizontal direction. Therefore, the quantity of vertical channels needs to be increased by 1, and the quantity of required channels needs to be recalculated.

The quantity of vacant channels is divided into Z groups, where each group includes n channels, Z is an even number greater than 0 and less than X, and n is a natural number.

n channels are deducted separately from first Z/2 columns and last Z/2 columns of the matrix.

T is divided into 2 groups, 4 groups, 6 groups, or the like, so that several degrees of freedom can be deducted from the front and the back of the X×Y matrix, and a total quantity of channels obtained after deduction is consistent with the quantity of available channels. In this way, a method for allocating degrees of freedom of channels is obtained, which meets the quantity of available channels.

In this embodiment, the quantity of horizontal channels is first determined, and then the quantity of vertical channels is obtained based on the quantity of available channels, so that horizontal and vertical channel resources are more fully utilized. Usually, the quantity of vertical channels obtained through calculation by using the method provided in embodiments of this application is greater than 2. Therefore, vertical beamforming effect may alternatively be better supported.

In a possible implementation, that an effective antenna array aperture and a system operating wavelength are obtained specifically includes:

The effective antenna array aperture and a system operating frequency are obtained; and
a speed of light is divided by the system operating frequency, to obtain the system operating wavelength.

In this embodiment, the system operating wavelength may be obtained through calculation based on the system operating frequency. Therefore, the system operating wavelength may alternatively be obtained by obtaining the system operating frequency and dividing the speed of light by the system operating frequency.

In a possible implementation, that a quantity X of horizontal channels that are within a range of the effective antenna array aperture and that conform to a half-wavelength principle is calculated based on the system operating wavelength specifically includes:

The effective antenna array aperture is divided by a half of the system operating wavelength and then rounding is performed, to obtain the quantity X of horizontal channels.

In this embodiment, because antenna channel arrangement with a 0.5 wavelength spacing can achieve desired beamforming effect and a proper beam sweeping range, there may be a decimal part in a result obtained by dividing the effective antenna array aperture by the system operating wavelength, but the quantity of horizontal channels needs to be an integer. Therefore, for processing of the decimal part, principles such as rounding, rounding up, and rounding down may be followed. A product of a finally obtained quantity of horizontal channels and a half wavelength is approximately equal to the effective antenna array aperture in the horizontal direction.

In a possible implementation, after that n channels are deducted separately from first Z/2 columns and last Z/2 columns of the matrix, the method further includes:

Channels in the first Z/2 columns and the last Z/2 columns of the matrix are centered.

In this embodiment, after the channels in the first Z/2 columns and the last Z/2 columns are deducted, remaining channels may be centered to meet a requirement of symmetry with respect to a horizontal midline, so that the arranged channels are symmetrical with respect to the horizontal midline and a vertical midline.

In a possible implementation, the method further includes:
A pilot transmission weight value of a first beam in a middle column with Y channels is calculated, where the pilot transmission weight value of the first beam meets: Beamforming effect, implemented based on the pilot transmission weight value of the first beam, of a two-dimensional codebook-based beam is optimally close to beamforming effect implemented when the quantity of vertical channels is 2.

Pilot transmission weight values of other Y-1 beams in the middle column are separately calculated based on the first pilot transmission weight value.

Pilot transmission weight values of a side column with Y-n channels are calculated based on pilot transmission weight values of the middle column, where the pilot transmission weight values of the side column meet: Beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

In this embodiment, the calculation of transmission weight values of beams in the channels arranged based on the foregoing method needs to first follow the following principle: Beamforming effect implemented by performing beamforming on beams in the maximum quantity of vertical channels in the middle column using corresponding transmission weight values of beams is optimally close to the beamforming effect implemented using 2 vertical channels in the conventional technical means. For a side column with a small quantity of degrees of freedom of channels, beamforming effect implemented using multi-beam weight values transmitted through pilot needs to be as consistent as possible with the foregoing beamforming effect of the middle column with a large quantity of degrees of freedom of channels.

According to a second aspect, this application provides an antenna channel allocation apparatus, including:

a transceiver module, configured to obtain an effective antenna array aperture and a system operating wavelength; and

a channel processing module, configured to calculate, based on the system operating wavelength, a quantity X of horizontal channels that are within a range of the effective antenna array aperture and that conform to a half-wavelength principle, where X is an integer greater than 2, where

the transceiver module is further configured to obtain a quantity of available channels of the system;

the channel processing module is further configured to divide the quantity of available channels by the quantity of horizontal channels and then perform rounding up, to obtain a quantity Y of vertical channels;

the channel processing module is further configured to arrange a matrix whose quantity of channels in a horizontal direction is X and whose quantity of channels in a vertical direction is Y, and calculate a product of X and Y, to obtain a quantity of required channels;

if the quantity of required channels is equal to the quantity of available channels, the channel processing module is further configured to allocate the antenna channels based on the X×Y matrix; or

if the quantity of required channels is greater than the quantity of available channels, the channel processing module is further configured to calculate a difference between the quantity of required channels and the quantity of available channels, to obtain a quantity T of vacant channels;

if T is an odd number, the channel processing module is further configured to increase the quantity of vertical channels by 1, and recalculate the quantity of required channels; or

the channel processing module is further configured to divide the quantity of vacant channels into Z groups, where each group includes n channels, Z is an even number greater than 0 and less than X, and n is a natural number; and

the channel processing module is further configured to deduct n channels separately from first Z/2 columns and last Z/2 columns of the matrix.

In a possible implementation, the antenna channel allocation apparatus further includes:

a baseband signal processing module, configured to calculate a pilot transmission weight value of a first beam in a middle column with Y channels, where the pilot transmission weight value of the first beam meets: beamforming effect, implemented based on the pilot transmission weight value of the first beam, of a two-dimensional codebook-based beam is optimally close to beamforming effect implemented when the quantity of vertical channels is 2, where

the baseband signal processing module is further configured to separately calculate pilot transmission weight values of other Y-1 beams in the middle column based on the first pilot transmission weight value; and

the baseband signal processing module is further configured to calculate pilot transmission weight values of a side column with Y-n channels based on pilot transmission weight values of the middle column, where the pilot transmission weight values of the side column meet: beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

According to a third aspect, this application provides a wireless communication antenna, including an antenna array, where radio frequency channels on the antenna array are arranged based on the method according to any one of the possible implementations of the first aspect.

In a possible implementation, a total quantity of antenna elements connected to each column of the antenna array is the same.

According to a fourth aspect, an embodiment of this application provides a computer-readable storage medium. The computer storage medium stores computer instructions, and the computer instructions are used to perform the method according to any possible implementation of any one of the foregoing aspects.

According to a fifth aspect, an embodiment of this application provides a computer program product including instructions. When the computer program product runs on a computer, the computer is enabled to perform the method according to any one of the foregoing aspects.

According to a sixth aspect, this application provides a chip system. The chip system includes a processor, configured to support an antenna channel allocation apparatus in implementing functions in the foregoing aspects, for example, generating or processing data and/or information in the foregoing method. In a possible design, the chip system further includes a memory. The memory is configured to store program instructions and data that are necessary for the antenna channel allocation apparatus, to implement a function in any one of the foregoing aspects. The chip system may include a chip, or may include a chip and another discrete device.

## BRIEF DESCRIPTION OF DRAWINGS

FIG. 1 shows an example of a dual-polarized 32 TRX architecture based on degrees of freedom of 8 horizontal channels and degrees of freedom of 2 vertical channels in a conventional technology;

FIG. 2 shows a CSI-RS pilot mapping solution with 2 vertical ports and 2 horizontal ports in a conventional technology;

FIG. 3 is a diagram of transmitting only one narrow beam on a single vertical-dimensional pilot port in a conventional technology;

FIG. 4A and FIG. 4B are a schematic flowchart of an antenna channel allocation method according to an embodiment of this application;

FIG. 5 is a diagram of "233332" allocation of degrees of freedom of channels according to an embodiment of this application;

FIG. 6 is a diagram of "466664" allocation of degrees of freedom of channels according to an embodiment of this application;

FIG. 7 is a diagram of "556655" allocation of degrees of freedom of channels according to an embodiment of this application;

FIG. 8 is a diagram of "242" allocation of degrees of freedom of channels according to an embodiment of this application;

FIG. 9 is a diagram of a structure of an antenna channel allocation apparatus according to an embodiment of this application; and

FIG. 10 is a diagram of transmitting three narrow beams in different directions on a single vertical-dimensional pilot port according to an embodiment of this application.

## DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data termed in such a way may be interchangeable in proper circumstances, so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on an actual requirement to achieve the objectives of the solutions of this application.

The technical solutions in embodiments of this application may be applied to 4G, 5G, and other wireless communication systems. In a wireless mobile communication system, a multiple-antenna technology is a key technology for improving wireless air interface performance. A larger quantity of antennas and degrees of freedom of channels indicates a more obvious performance gain provided by the multiple-antenna technology. An antenna plays an important role in receiving and sending a signal in a communication system, and all communication data needs to be transmitted through the antenna. Therefore, performance of the antenna directly affects performance of the entire wireless communication system. Development of antennas has also evolved from an initial omnidirectional antenna and a single-frequency single-channel technology to a current multi-frequency multi-channel technology. Currently, commercial multi-antenna channel deployment is evolving from a multiple-antenna technology represented by 4T4R and 8T8R to a massive multiple-input multiple-output (massive MIMO, MM) system.

In a massive multiple-input multiple-output technology, a large quantity of antennas is densely arranged, to form an antenna array with small spacings. N narrow fine beam with a stronger spatial resolution capability can be generated by using the centralized large-scale antenna, so that parallel transmission to more users can be implemented in space domain by using a space division multiple access manner of a plurality of beams, and a system capacity can be significantly improved. Therefore, the massive multiple-input multiple-output technology is also referred to as a massive antenna beamforming technology (massive antenna for short). Beamforming based on a massive antenna system is considered as a main implementation form of the massive MIMO technology.

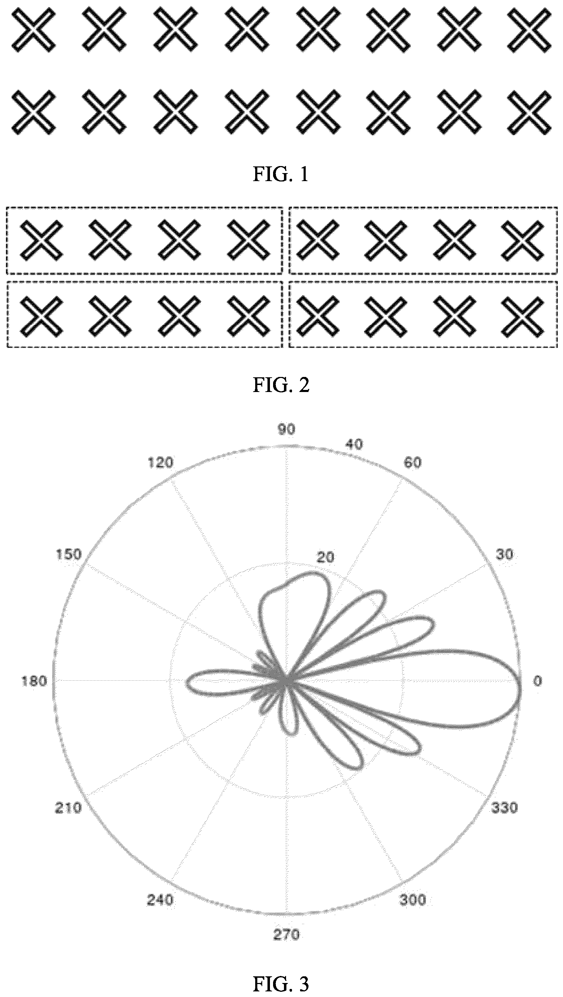

A current MM system is based on dual-polarized 32 TRXs with 8 horizontal channels and 2 vertical channels, or dual-polarized 64 TRXs with 8 horizontal channels and 4 vertical channels. This solution is easy to implement. A main purpose is to place as many degrees of freedom of channels as possible on a horizontal surface, to maximize a beamforming capability on the horizontal surface. Then, remaining degrees of freedom are evenly placed in each column, to form a structure with 2 rows and a plurality of columns, as shown in FIG. 1. FIG. 1 shows an example of the typical dual-polarized 32 TRX architecture with degrees of freedom of 8 horizontal channels and degrees of freedom of 2 vertical channels. A simple arrangement manner in which fixed degrees of freedom of vertical channels are 2 directly corresponds to a codebook in the 3GPP protocol. For example, in the 32 TRX architecture, channel state information-reference signals (Channel State Information-Reference Signals, CSI-RSs) are independently transmitted through vertical channels to form 2 vertical ports (ports), and 2/4/8 horizontal-dimensional ports. This corresponds to a codebook configuration N1,N2= (2,2)/(2,4)/(2,8) in the NR R15/R16 protocol, as shown in FIG. 2. FIG. 2 shows a CSI-RS pilot mapping solution N1,N2= (2,2) with 2 vertical ports and 2 horizontal ports. In this way, each pilot port corresponds to one degree of freedom of one vertical channel and corresponds to one vertical narrow beam, as shown in FIG. 3. FIG. 3 is a diagram of transmitting only one narrow beam on a single vertical-dimensional pilot port. Vertical beamforming of the entire MM system is limited by a range of the narrow beam.

It may be understood that in the foregoing solution, degrees of freedom of only 2 vertical-dimensional channels are provided, and a vertical-dimensional beamforming capability is limited by hardware. For CSI-RSs, only one narrow beam rather than a plurality of beams can be transmitted on each port. Therefore, the foregoing technology has a defect that a beam sweeping range is narrow or there is a beam gain loss.

To resolve the foregoing problem, embodiments of this application provide an antenna channel allocation method and a related apparatus, so that degrees of freedom of channels are fully utilized through a proper configuration, and vertical-dimensional beamforming effect is improved without affecting a horizontal beamforming capability, thereby improving overall performance of a multiple-antenna system.

It may be understood that a complete expression of degrees of freedom of channels (degrees of freedom of RF channels) should be degrees of freedom of radio frequency channels. The radio frequency channel is a concept in hardware, and the degree of freedom is a concept in wireless communication and signal processing. Usually, a quantity of radio frequency channels determines a dimension of baseband signal processing in a wireless communication system. That is, there is a one-to-one correspondence between the radio frequency channels and degrees of freedom of signals. In this embodiment of this application, the degrees of freedom of channels represent not only the radio frequency channels, but also baseband signal processing units, that is, a concept of degrees of freedom.

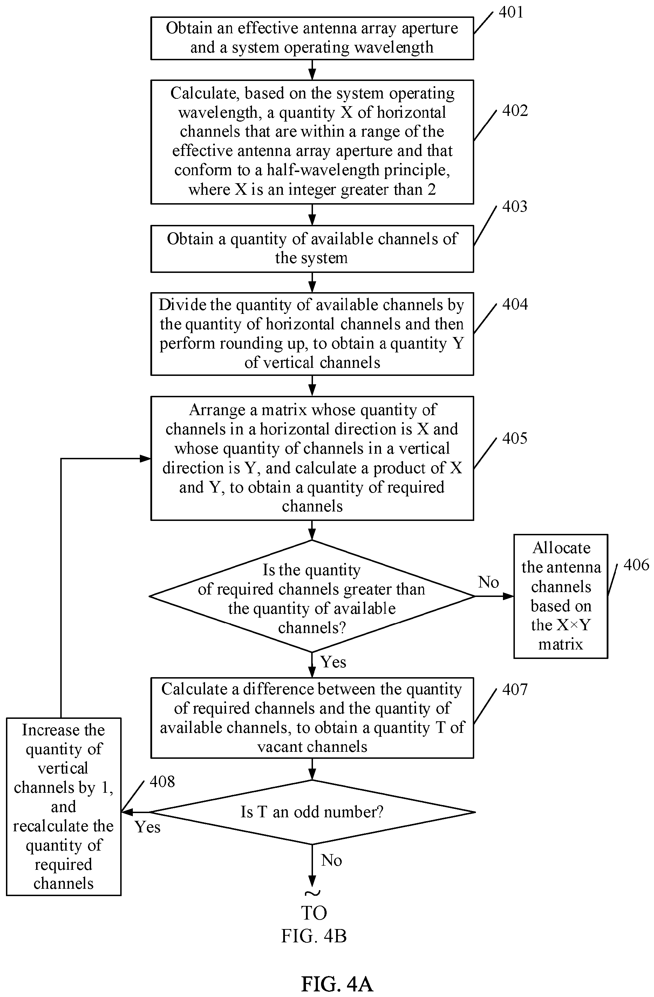

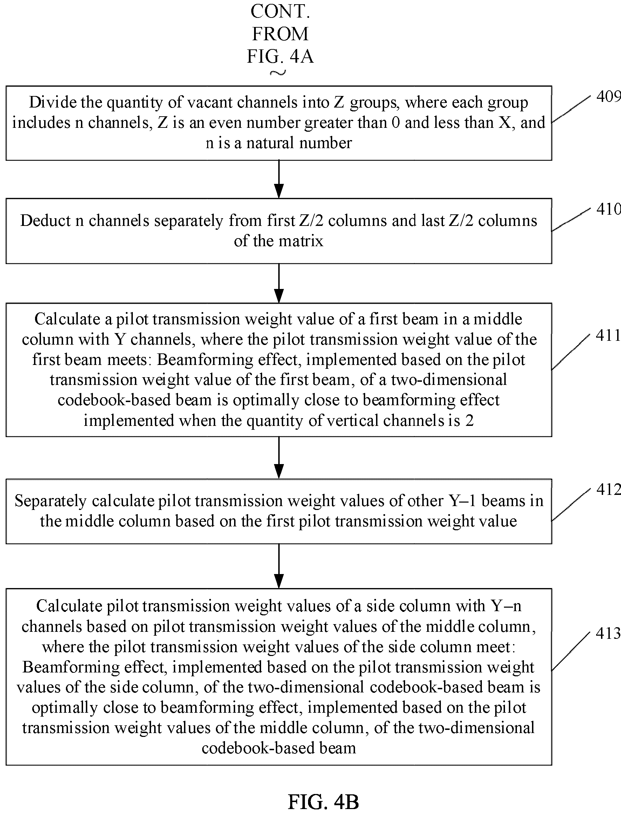

Refer to FIG. 4A and FIG. 4B. FIG. 4A and FIG. 4B are a schematic flowchart of an antenna channel allocation method according to an embodiment of this application. The method is applied to a wireless communication system, and may be specifically applied to a massive multiple-input multiple-output MM system. The method includes the following steps.

401: Obtain an effective antenna array aperture and a system operating wavelength.

It may be understood that antenna surface is also called antenna array, the effective antenna array aperture is a real effective aperture of an antenna obtained by deducting a size of a border of the antenna array from an external size of the antenna, and the system operating wavelength is a wavelength of the MM system in a normal operating state.

In a possible implementation, the system operating wavelength may be obtained through calculation based on the system operating frequency. Therefore, the system operating wavelength may alternatively be obtained by obtaining the system operating frequency and dividing the speed of light by the system operating frequency.

In the conventional technical means mentioned above, a simple connection manner with 8 horizontal columns or 16 horizontal columns and 2 vertical rows is typically used. In this manner, an actual aperture of the antenna array is not considered. As a result, degrees of freedom of channels cannot be fully used. Therefore, in this embodiment of this application, the effective antenna array aperture and the operating wavelength of an MM system are obtained, to calculate a proper quantity of channels. When horizontal and vertical arrangement of channels on an antenna array is determined, degrees of freedom of the channels are allocated in space.

402: Calculate, based on the system operating wavelength, a quantity X of horizontal channels that are within a range of the effective antenna array aperture and that conform to a half-wavelength principle, where X is an integer greater than 2.

It may be understood that antenna channel arrangement with a 0.5 wavelength spacing can achieve desired beamforming effect and a proper beam sweeping range, which meets a coverage requirement on a horizontal surface. Therefore, degrees of freedom of the horizontal channels are selected based on the half-wavelength principle. The quantity X of horizontal channels obtained through calculation indicates a quantity of channels in each row.

In a possible implementation, the effective antenna array aperture is divided by a half of the system operating wavelength and then rounding is performed, to obtain the quantity X of horizontal channels.

It may be understood that in this embodiment, the effective antenna array aperture is used to calculate the quantity of horizontal channels, and therefore is specifically an effective antenna array aperture in a horizontal direction. A horizontal aperture of a half of the antenna array is typically less than 500 mm, depending on a live network deployment requirement. The effective antenna array aperture A (unit: mm) is obtained by deducting the border of the antenna array. By using the system operating frequency f (unit: Hz), the system operating wavelength L = c/f (unit: mm) at the frequency can be calculated, where c represents the speed of light. In this case, the quantity of horizontal channels is as follows:

$$K_{hor} = \frac{A}{0.5L} = \frac{2A}{L}$$

There may be a decimal part in a result obtained according to the formula above, but the quantity $K_{hor}$ of horizontal channels needs to be an integer. Therefore, for processing of the decimal part, principles such as rounding, rounding up, and rounding down may be followed. A product of a finally obtained quantity $K_{hor}$ of horizontal channels and a half wavelength is approximately equal to the effective antenna array aperture in the horizontal direction.

403: Obtain a quantity of available channels of the system.

It may be understood that after the quantity of channels in the horizontal direction is determined, a quantity of channels in a vertical direction may be obtained through calculation by obtaining the quantity of available channels of the system.

It should be noted that the dual-polarized 32 TRX architecture shown in FIG. 1 is used as an example, and each channel for dual polarization includes two channels for single-polarization that are perpendicular to each other. Therefore, although an actual quantity of channels is 32, a quantity of channels for single polarization is 16. In this embodiment, specifically, channel allocation for single polarization may be considered, and channel allocation for dual polarization may also be considered. However, either of the two cases needs to be consistent. For example, if the quantity of available channels is a quantity of channels that can be allocated for single polarization, the quantity of horizontal channels obtained through calculation is also a quantity of horizontal channels for single polarization. If the quantity of available channels is a quantity of channels that can be allocated for dual polarization, the quantity of horizontal channels obtained through calculation is also a quantity of horizontal channels for dual polarization. If the quantity of available channels is a quantity of channels that can be allocated for dual polarization, that is, a total quantity of channels, but the quantity of horizontal channels is a quantity of horizontal channels for single polarization, the quantity of available channels needs to be divided by 2 during calculation of the quantity of available channels and the quantity of horizontal channels.

404: Divide the quantity of available channels by the quantity of horizontal channels and then perform rounding up, to obtain a quantity Y of vertical channels.

It may be understood that after the quantity of horizontal channels is obtained through calculation, the quantity of available channels is divided by the quantity of horizontal channels, to obtain an average quantity of vertical channels in each column. Because the quantity Y of vertical channels needs to be an integer, if a calculation result in this case is rounded down, a product of X and Y is less than the quantity of available channels. Because the quantity of channels in the horizontal direction has been determined based on an aperture of the antenna array, available channel resources cannot be fully and effectively allocated. Therefore, in this embodiment, the quantity of available channels is divided by the quantity of horizontal channels and then rounding up is performed, to obtain the quantity Y of vertical channels. It may be understood that the quantity Y of vertical channels is actually a maximum quantity of channels in the vertical direction.

In this embodiment, if a total quantity of channels is M, the maximum quantity of channels in the vertical direction is as follows:

$$K_{ver,max} = \left\lceil \frac{M}{2K_{hor}} \right\rceil$$

It may be understood that M represents the quantity of channels that can be allocated for dual polarization, and is divided by 2 because channel allocation only for single polarization needs to be considered in this embodiment. If the quantity of available channels is the quantity of channels for single polarization, division by 2 is not needed.

In this embodiment, the quantity of horizontal channels is first determined, and then the quantity of vertical channels is obtained based on the quantity of available channels, so that horizontal and vertical channel resources are more fully utilized. Usually, the quantity of vertical channels obtained through calculation by using the method provided in embodiments of this application is greater than 2. Therefore, vertical beamforming effect may alternatively be better supported.

405: Arrange a matrix whose quantity of channels in a horizontal direction is X and whose quantity of channels in a vertical direction is Y, and calculate a product of X and Y, to obtain a quantity of required channels.

It may be understood that after the quantity X of horizontal channels and the quantity Y of vertical channels are obtained, the channels are arranged based on the matrix whose quantity of channels in the horizontal direction is X and whose quantity of channels in the vertical direction is Y, to obtain an antenna channel allocation method with X horizontal columns and Y vertical rows. However, because rounding up is used when the quantity Y of vertical channels is calculated, a quantity of antenna channels in horizontal X columns and antenna channels in vertical Y rows may be greater than the quantity of available channels. In addition, the product of X and Y needs to be calculated, to obtain the quantity of required channels.

406: If the quantity of required channels is equal to the quantity of available channels, allocate the antenna channels based on the X×Y matrix.

It may be understood that if a quotient obtained after the quantity of available channels is divided by the quantity of horizontal channels is an integer, the antenna channels are directly allocated based on the X×Y matrix, thereby implementing efficient allocation of channel resources in horizontal and vertical dimensions.

407: If the quantity of required channels is greater than the quantity of available channels, calculate a difference between the quantity of required channels and the quantity of available channels, to obtain a quantity T of vacant channels.

It may be understood that if a quotient obtained after the quantity of available channels is divided by the quantity of horizontal channels is not an integer, because rounding up is performed, a case in which the quantity of required channels is greater than the quantity of available channels may appear. That is, total degrees of freedom of the available channels are less than a quantity of channels required by even arrangement in the horizontal X columns and the vertical Y rows.

Therefore, the quantity T of vacant channels is calculated as follows:

$$T = K_{ver,max} \times K_{hor} - \frac{M}{2}$$

The quantity T of vacant channels is equal to the quantity of channels required by even arrangement in the horizontal $K_{hor}$ columns and the vertical $K_{ver,max}$ rows minus half of the total quantity M of channels for dual polarization.

408: If T is an odd number, increase the quantity of vertical channels by 1, and recalculate the quantity of required channels.

It may be understood that the quantity of vacant channels needs to be deducted from the evenly arranged channel matrix, to obtain a final channel allocation solution. A deduction method is to evenly remove the quantity T of vacant channels from two ends of the matrix. Because a symmetry principle is also important in allocation of degrees of freedom of channels, and is beneficial for a beam formed by the MM system to have a good waveform characteristic, if T is an odd number, it is impossible to implement even symmetrical reduction of degrees of freedom at two ends in the horizontal direction. Therefore, the quantity of vertical channels needs to be increased by 1, and the quantity of required channels needs to be recalculated, that is:

$$K_{ver,max} = \left\lceil \frac{M}{2K_{hor}} \right\rceil + 1$$

This implements bilaterally symmetrical allocation of degrees of freedom of channels.

409: Divide the quantity of vacant channels into Z groups, where each group includes n channels, Z is an even number greater than 0 and less than X, and n is a natural number.

410: Deduct n channels separately from first Z/2 columns and last Z/2 columns of the matrix.

It may be understood that when the quantity T of vacant channels is an even number, the quantity of vacant channels is divided into Z groups, where each group includes n channels, Z is an even number greater than 0 and less than X, and n is a natural number. T is divided into 2 groups, 4 groups, 6 groups, or the like, so that several degrees of freedom can be deducted from the front and the back of the X×Y matrix, and a total quantity of channels obtained after deduction is consistent with the quantity of available channels, that is:

$$T = nZ$$

$$Z = 2,4,6\cdots$$

If Z = 2 is used, n degrees of freedom may be deducted separately from two horizontal side columns. For 4 groups, n degrees of freedom may be deducted separately from two left side columns and two right side columns, namely, four side columns, and so on. In this way, a new method for allocating degrees of freedom of channels is obtained, which meets a total quantity M of channels. In this embodiment, the quantity of horizontal channels is first determined, and then the quantity of vertical channels is obtained based on the quantity of available channels, so that horizontal and vertical channel resources are more fully utilized. Usually, the quantity of vertical channels obtained through calculation by using the method provided in embodiments of this application is greater than 2. Therefore, vertical beamforming effect may alternatively be better supported.

In a possible implementation, the method further includes:

Channels in the first Z/2 columns and the last Z/2 columns of the matrix are centered.

It may be understood that after the channels in the first Z/2 columns and the last Z/2 columns are deducted, remaining channels may be centered to meet a requirement of symmetry with respect to a horizontal midline, so that the arranged channels are symmetrical with respect to the horizontal midline and a vertical midline.

The following provides examples of specific allocation, corresponding to the foregoing step 401 to step 410, for degrees of freedom of hardware channels.

Example 1: For an intermediate frequency 1.8/2.1 GHz, the aperture of the antenna array in the horizontal direction is 500 mm, a total size of the border of the antenna array is 40 mm, and a total quantity M = 32 of FDD MM TRXs is used. In this case, if the system operating wavelength is L =150 mm, the following calculation is performed:

$$K_{hor} = \frac{2 \times (500 - 40)}{150} \approx 6$$

$$K_{ver,max} = \left\lceil \frac{32}{2 \times 6} \right\rceil = 3$$

$$T = 6 \times 3 - \frac{32}{2} = 2$$

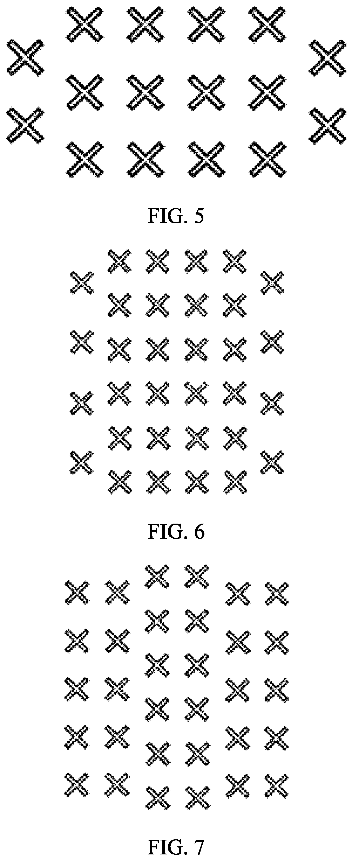

Therefore, Z=2 can be used, and one degree of freedom is deducted separately from two side columns. In this case, 233332 allocation of degrees of freedom of channels should be used, as shown in FIG. 5.

Example 2: For an intermediate frequency 1.8/2.1 GHz, the aperture of the antenna array in the horizontal direction is 500 mm, a total size of the border of the antenna array is 40 mm, and a total quantity M = 64 of FDD MM TRXs is used. In this case, if the system operating wavelength is L=150 mm, the following calculation is performed:

$$K_{hor} = \frac{2 \times (500 - 40)}{150} \approx 6$$

$$K_{ver,max} = \left\lceil \frac{64}{2 \times 6} \right\rceil = 6$$

$$T = 6 \times 6 - \frac{64}{2} = 4$$

Therefore, Z=2 can be used, and two degrees of freedom are deducted separately from two side columns. In this case, 466664 allocation of degrees of freedom of channels should be used, as shown in FIG. 6. Alternatively, Z=4 can be used, and 4 degrees of freedom are deducted separately from left two side columns and right two side columns. In this case, 556655 allocation of degrees of freedom of channels is formed, as shown in FIG. 7.

Example 3: For a low frequency 900 MHz, the aperture of the antenna array in the horizontal direction is 500 mm, a total size of the border of the antenna array is 40 mm, and a total quantity M = 16 of FDD MM TRXs is used. In this case, if the system operating wavelength is L =310 mm, the following calculation is performed:

$$K_{hor} = \frac{2 \times (500 - 40)}{310} \approx 3$$

$$K_{ver,max} = \left\lceil \frac{16}{2 \times 3} \right\rceil = 3$$

$$T = 3 \times 3 - \frac{16}{2} = 1$$

Because T=1, the group is not enough to be divided into two or more groups. Therefore, according to the foregoing principle, the following calculation may be performed:

$$K_{ver,max} = \left\lceil \frac{16}{2 \times 3} \right\rceil + 1 = 4$$

Correspondingly:

$$T = 3 \times 4 - \frac{16}{2} = 4$$

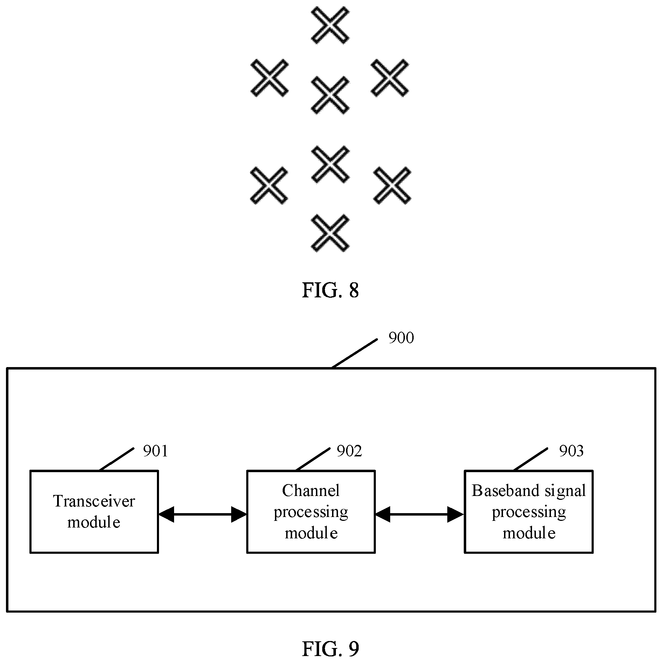

Therefore, Z=2 can be used, and two degrees of freedom are deducted separately from two side columns. In this case, 242 allocation of degrees of freedom of channels should be used, as shown in FIG. 8.

It should be noted that each of the foregoing channels is connected to a corresponding vertical antenna array, and quantities of rows of antennas connected to the channels may be the same or may be different.

According to the foregoing antenna channel allocation method, a plurality of vertical-dimensional beams can be transmitted on each port in a case of vertical-dimensional 2-port pilot, thereby increasing a beam coverage area or improving a beam gain. A quantity of horizontal-dimensional ports may be a quantity supported by a protocol, for example, 2, 4, or 6.

In a possible implementation, the method further includes a method, applied to the foregoing method, of calculating transmission weight values of beams. The method includes the following steps.

411: Calculate a pilot transmission weight value of a first beam in a middle column with Y channels, where the pilot transmission weight value of the first beam meets: Beamforming effect, implemented based on the pilot transmission weight value of the first beam, of a two-dimensional codebook-based beam is optimally close to beamforming effect implemented when the quantity of vertical channels is 2.

In this embodiment, the calculation of transmission weight values of beams in the channels arranged based on the foregoing method needs to first follow the following principle: Beamforming effect implemented by performing beamforming on beams in the maximum quantity of vertical channels in the middle column using corresponding transmission weight values of beams is optimally close to the beamforming effect implemented using 2 vertical channels in the conventional technical means.

An example in which the quantity of vertical channels in the middle column is b, and the quantity of vertical channels in the side column is a, where b>a. The quantity of vertical channels corresponds to vertical-dimensional degrees of freedom. For a column whose vertical-dimensional degrees of freedom are b (b represents a large quantity of channels), the following weight value vector matrix needs to be multiplied during pilot calculation:

$$P = \begin{bmatrix} p_{11} & p_{21} \\ \vdots & \vdots \\ p_{1b} & p_{2b} \end{bmatrix}$$

The weight value vector matrix meets the following formula:

$$P_{opt} = argmin\{\|I_2 \otimes f_X C_2 - P \otimes f_Y C_2\|_F\} s.t. P^H P = I$$

$\otimes$ represents a Kronecker product. I represents an identity matrix. If a number subscript is attached, an identity matrix of a corresponding number is represented. For example, $I_2$ represents an identity matrix of $2 \times 2$. $P^H$ represents a conjugate transpose matrix of the matrix P. argmin{f(t)} is a value of t when a function in parentheses reaches a minimum value. $f_x$ represents a 1-to-x internal analog drive weight value of a channel, and corresponds to an analog drive weight value of a channel in a column whose degrees of freedom are a. $f_y$ represents a 1-to-y internal analog drive weight value of a channel, and corresponds to an analog drive weight of a channel in a column whose degrees of freedom are b. For example:

$$f_x = \begin{bmatrix} 1 & e^{j\phi} \cdots e^{j(x-1)\phi} \end{bmatrix}^T$$

$$f_y = \begin{bmatrix} 1 & e^{j\phi} \cdots e^{j(y-1)\phi} \end{bmatrix}^T$$

j represents an imaginary part of a complex number. A series of electromagnetic wave sources, referred to as elements or antenna units, are arranged in an antenna. x and y represent quantities of antenna elements connected to each channel in a middle column and a side column, respectively, and a quantity of antenna elements in each column is fixed. That is, a product of degrees of freedom of channels in the middle column and the quantity of elements in the middle column is equal to a product of degrees of freedom of channels in the side column and the quantity of elements in the side column, that is, x and y meet a*x=b*y.

In the foregoing formula $P_{opt}$, $C_2$ represents a two-dimensional codebook. For example, the following value may be used:

$$C_2 = \begin{bmatrix} 1 & 1 \\ 1 & -1 \end{bmatrix}$$

An optimization problem corresponding to the foregoing formula $P_{opt}$ is solved, so that optimal approximation is performed in an entire beam range. This embodiment provides the following solution to the foregoing optimization problem:

$$G = I_b \otimes f_y^H (I_2 \otimes f_X)$$

G represents a matrix of b×2, and singular value decomposition is performed on the matrix G as follows:

$$G = USV^H$$

U represents a b×b-order unitary matrix. S represents a positive semi-definite b×2-order diagonal matrix. $V^H$ represents a 2×2-order unitary matrix. In this case:

$$P_{opt} = U(:,1:2)V(:,1:2)^H$$

(:,1:2) represents a manner of representing a matrix in the MATLAB language. A symbol "," is used to distinguish between a row and a column. Digits before and after a colon (:) indicate a range. If there are no digits in front of and behind the colon (:), an entire range applies. (:,1:2) indicates that the range of the matrix is all rows and columns 1 and 2.

For ease of calculation, normalized processing can be performed for $P_{opt}$. Even if one scalar is multiplied, energy of each column is 1.

In addition, another two-dimensional codebook may alternatively be used for $C_2$, for example $C_2 = \begin{bmatrix} 1 \\ 1 \end{bmatrix}$ That is, optimal approximation is performed only in a direction of a strongest beam. In this way, a solution to the optimization problem may be different from the foregoing $P_{opt}$.

In this way, a single vertical-dimensional pilot transmission weight value $P_{opt}$ of a column whose degrees of freedom of channels are b is obtained by using step 411.

412: Separately calculate pilot transmission weight values of other Y-1 beams in the middle column based on the first pilot transmission weight value.

Because the degrees of freedom b of channels are typically greater than 2, a vertical sweeping range of the existing degrees of freedom b of channels is not fully utilized for a narrow beam corresponding to the pilot transmission weight value calculated in step 411. In other words, when b is greater than 2, the vertical sweeping range may be larger. Therefore, allocation of the foregoing degrees of freedom of channels improves a vertical-dimensional beamforming capability.

In step 411, only a pilot transmission weight value of one beam in a channel in the middle column is calculated. To calculate a pilot transmission weight value of another beam in the middle column, multi-beam sweeping needs to be introduced, to improve overall system performance by using an advantage of a larger vertical sweeping range. Based on the pilot transmission weight value $P_{opt}$ of a single beam that is obtained through calculation in step 411, the following weight values of a plurality of vertical-dimensional beams in the column whose degrees of freedom of channels are b may be obtained:

$$\text{beam 1: } P_{opt}$$

$$\text{beam 2: } \text{diag}\left(1 \; e^{j2\pi/b} \; \cdots \; e^{j2(b-1)\pi/b}\right) \cdot P_{opt}$$

$$\vdots \text{ and}$$

$$\text{beam b: } \text{diag}\left(1 \; e^{j2(b-1)\pi/b} \; \cdots \; e^{j2(b-1)(b-1)\pi/b}\right) \cdot P_{opt}$$

diag() represents a diagonal matrix in which elements in parentheses are diagonal elements.

It may be understood that beams transmitted on different channels in a same column respectively correspond to different directions, and pilot transmission weight values of b beams in the middle column may be obtained by multiplying the pilot transmission weight value $P_{opt}$ of a single beam obtained through calculation by a steering vector in a corresponding direction.

413: Calculate pilot transmission weight values of a side column with Y-n channels based on pilot transmission weight values of the middle column, where the pilot transmission weight values of the side column meet: beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

For a side column with a small quantity of degrees of freedom of channels (a quantity of channels is a), beamforming effect implemented through multi-beam weight values transmitted through pilot needs to be as consistent as possible with the foregoing beamforming effect of the middle column with a large quantity of degrees of freedom of channels, to achieve an overall optimal vertical beam. A vector of the pilot transmission weight value of the side column may be represented as follows:

$$\boldsymbol{Q}_{opt}^{(i)} = \text{argmin}\left\{\left\|\boldsymbol{P}_{opt}^{(i)} \otimes f_X C_2 - Q^{(i)} \otimes f_Y C_2\right\|_F\right\} s.t.\, \boldsymbol{Q}^{(i)H} \boldsymbol{Q}^{(i)} = \boldsymbol{I}$$

$\boldsymbol{P}_{opt}^{(i)}$ represents a pilot transmission weight value of an $i^{th}$ beam in a column whose quantity of degrees of freedom of channels is b. $i = 1,\cdots,b$ and $\boldsymbol{P}_{opt}^{(i)}$ are obtained in step 411. $\boldsymbol{Q}^{(i)}$ represents a matrix of $a \times 2$, and represents a pilot transmission weight value of a beam that corresponds to a column whose quantity of degrees of freedom of channels is a and that needs to be calculated. A purpose of calculation according to the formula corresponding to the foregoing $\boldsymbol{Q}_{opt}^{(i)}$ is to ensure that beamforming effect in different columns (a middle column and a side column) is as consistent as possible.

It may be understood that a calculation manner of $\boldsymbol{Q}_{opt}^{(i)}$ is similar to that of $\boldsymbol{P}_{opt}$ in step 411, and a typical value of

$C_2$ may be $C_2 = \begin{bmatrix} 1 & 1 \\ 1 & -1 \end{bmatrix}$ or $C_2 = \begin{bmatrix} 1 \\ 1 \end{bmatrix}$. Beamforming ranges concerned for the two values are different. The value $C_2 = \begin{bmatrix} 1 & 1 \\ 1 & -1 \end{bmatrix}$ is optimal in an entire pilot beam range, and the value $C_2 = \begin{bmatrix} 1 \\ 1 \end{bmatrix}$ is optimal in a strongest direction of a pilot beam. $P_{opt}^{(i)}$ and $Q_{opt}^{(i)}$ are obtained through calculation by performing step 411 to step 413. The two respectively represent a pilot transmission weight value of each beam in the middle column with a larger quantity of channels and a pilot transmission weight value of each beam in the side column with a smaller quantity of channels. The plurality of beams may be transmitted through a plurality of different CSI-RS time-frequency resources, thereby improving a coverage area of a vertical beam in the MM system, and improving beamforming effect and system performance. It should be added that the pilot transmission weight value calculated in this application is mainly used to improve beamforming effect of a vertical-dimensional beam. Based on the vertical-dimensional beam and the pilot transmission weight value of the vertical-dimensional beam, a pilot transmission weight value of a horizontal-dimensional beam may still be calculated by using a conventional method known by a person skilled in the art. Details are not described herein again.

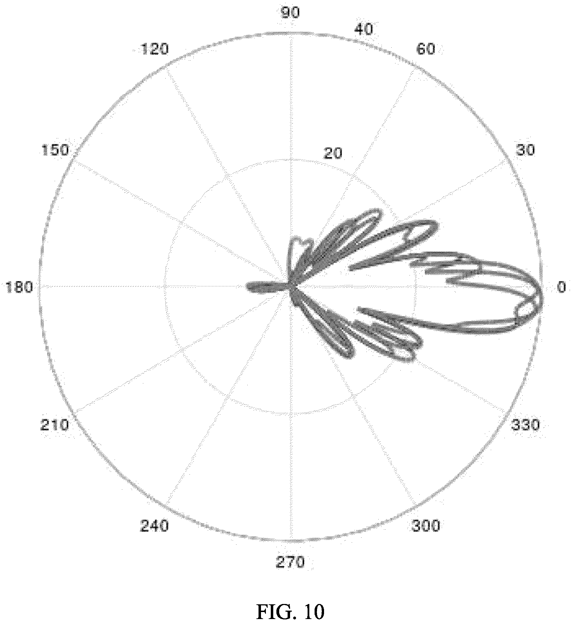

An example in which a channel allocation result 233332 shown in FIG. 5 in the 32 TRX architecture is used. In this case, three beams may be transmitted on each vertical-dimensional CSI-RS pilot port. In this way, a beamforming coverage area and a beamforming gain are extended, as shown in FIG. 10. It can be learned from actual detection that the beamforming coverage area is expanded from an original coverage area of 15 degrees through a single beam to more than 20 degrees, or the beam gain is increased by 1 to 2 dB.

It may be understood that the pilot transmission weight value in steps 410 to 412 may implement optimal transmission effect of a plurality of beams on a vertical surface, and the channel allocation methods in steps 401 to 409 are combined, to achieve an increase in beamforming effect on the vertical surface. Therefore, steps 410 to 412 are optional steps of the channel allocation method, that is, the method in steps 401 to 409 may independently exist in a related apparatus and system.

This application further provides an antenna channel allocation apparatus. FIG. 9 is a diagram of a structure of an antenna channel allocation apparatus 900 according to an embodiment of this application. The allocation apparatus for degrees of freedom of channels may be configured to perform the steps in the embodiment shown in FIG. 4A and FIG. 4B. For details, refer to the related descriptions in the foregoing method embodiment.

The antenna channel allocation apparatus 900 includes a transceiver module 901 and a channel processing module 902.

The transceiver module 901 may implement a corresponding communication function. The transceiver module 901 may also be referred to as a communication interface or a communication unit. The channel processing module 902 is configured to perform a processing operation of channel allocation.

Optionally, the antenna channel allocation apparatus 900 may further include a storage module. The storage module may be configured to store instructions and/or data. The channel processing module 902 may read the instructions and/or the data in the storage module, so that the antenna channel allocation apparatus implements the method embodiment shown in FIG. 4A and FIG. 4B.

For example, the antenna channel allocation apparatus 900 may be configured to execute the following solution.

The transceiver module is configured to obtain an effective antenna array aperture and a system operating wavelength.

In the conventional technical means, a simple connection manner with 8 horizontal columns or 16 horizontal columns and 2 vertical rows is typically used. In this manner, an actual aperture of the antenna array is not considered. As a result, degrees of freedom of channels cannot be fully used. Therefore, in this embodiment of this application, the effective antenna array aperture and the operating wavelength of an MM system are obtained, to calculate a proper quantity of channels. When horizontal and vertical arrangement of channels on an antenna array is determined, degrees of freedom of the channels are allocated in space.

The channel processing module 902 is configured to calculate, based on the system operating wavelength, a quantity X of horizontal channels that are within a range of an effective antenna array aperture and that conform to a half-wavelength principle, where X is an integer greater than 2.

It may be understood that antenna channel arrangement with a 0.5 wavelength spacing can achieve desired beamforming effect and a proper beam sweeping range, which meets a coverage requirement on a horizontal surface. Therefore, degrees of freedom of the horizontal channels are selected based on the half-wavelength principle. The quantity X of horizontal channels obtained through calculation indicates a quantity of channels in each row.

The transceiver module is further configured to obtain a quantity of available channels of the system.

After the quantity of channels in a horizontal direction is determined, a quantity of channels in a vertical direction may be obtained through calculation by obtaining the quantity of available channels of the system.

The channel processing module 902 is further configured to divide the quantity of available channels by the quantity of horizontal channels and then perform rounding up, to obtain a quantity Y of vertical channels.

After the quantity of horizontal channels is obtained through calculation, the quantity of available channels is divided by the quantity of horizontal channels, to obtain an average quantity of vertical channels in each column. In this embodiment, the quantity of available channels is divided by the quantity of horizontal channels and then rounding up is performed, to obtain the quantity Y of vertical channels. It may be understood that the quantity Y of vertical channels is actually a maximum quantity of channels in the vertical direction.

The channel processing module 902 is further configured to arrange a matrix whose quantity of channels in a horizontal direction is X and whose quantity of channels in a vertical direction is Y, and calculate a product of X and Y, to obtain a quantity of required channels.

After the quantity X of horizontal channels and the quantity Y of vertical channels are obtained, the channels are arranged based on the matrix whose quantity of channels in the horizontal direction is X and whose quantity of channels in the vertical direction is Y, to obtain an antenna channel allocation method with X horizontal columns and Y vertical rows. However, because rounding up is used when the quantity Y of vertical channels is calculated, a quantity of antenna channels in horizontal X columns and antenna channels in vertical Y rows may be greater than the quantity of available channels. In addition, the product of X and Y needs to be calculated, to obtain the quantity of required channels.

If the quantity of required channels is equal to the quantity of available channels, the channel processing module 902 is further configured to allocate the antenna channels based on the X×Y matrix.

If a quotient obtained after the quantity of available channels is divided by the quantity of horizontal channels is an integer, the antenna channels are directly allocated based on the X×Y matrix, thereby implementing efficient allocation of channel resources in horizontal and vertical dimensions.

If the quantity of required channels is greater than the quantity of available channels, the channel processing module 902 is further configured to calculate a difference between the quantity of required channels and the quantity of available channels, to obtain a quantity T of vacant channels.

If a quotient obtained after the quantity of available channels is divided by the quantity of horizontal channels is not an integer, because rounding up is performed, a case in which the quantity of required channels is greater than the quantity of available channels may appear. That is, total degrees of freedom of the available channels are less than a quantity of channels required by even arrangement in the horizontal X columns and the vertical Y rows. Therefore, the quantity T of vacant channels is calculated.

If T is an odd number, the channel processing module 902 is further configured to increase the quantity of vertical channels by 1, and recalculate the quantity of required channels.

The quantity of vacant channels needs to be deducted from the evenly arranged channel matrix, to obtain a final channel allocation solution. A deduction method is to evenly remove the quantity T of vacant channels from two ends of the matrix. Because a symmetry principle is also important in allocation of degrees of freedom of channels, and is beneficial for a beam formed by the MM system to have a good waveform characteristic, if T is an odd number, it is impossible to implement even symmetrical reduction of degrees of freedom at two ends in the horizontal direction. Therefore, the quantity of vertical channels needs to be increased by 1, and the quantity of required channels needs to be recalculated.

The channel processing module 902 is further configured to divide the quantity of vacant channels into Z groups, where each group includes n channels, Z is an even number greater than 0 and less than X, and n is a natural number.

The channel processing module 902 is further configured to deduct n channels separately from first Z/2 columns and last Z/2 columns of the matrix.

T is divided into 2 groups, 4 groups, 6 groups, or the like, so that several degrees of freedom can be deducted from the front and the back of the X×Y matrix, and a total quantity of channels obtained after deduction is consistent with the quantity of available channels.

In this embodiment, the quantity of horizontal channels is first determined, and then the quantity of vertical channels is obtained based on the quantity of available channels, so that horizontal and vertical channel resources are more fully utilized. Usually, the quantity of vertical channels obtained through calculation by using the method provided in embodiments of this application is greater than 2. Therefore, vertical beamforming effect may alternatively be better supported.

In a possible implementation, obtaining the effective antenna array aperture and the system operating wavelength specifically includes:

  obtaining the effective antenna array aperture and a system operating frequency; and
  dividing a speed of light by the system operating frequency, to obtain the system operating wavelength.

The system operating wavelength may be obtained through calculation based on the system operating frequency. Therefore, the system operating wavelength may alternatively be obtained by obtaining the system operating frequency and dividing the speed of light by the system operating frequency.

In a possible implementation, calculating, based on the system operating wavelength, the quantity X of horizontal channels that are within the range of the effective antenna array aperture and that conform to the half-wavelength principle specifically includes:
dividing the effective antenna array aperture by a half of the system operating wavelength and then performing rounding, to obtain the quantity X of horizontal channels.

In a possible implementation, after n channels are deducted separately from first Z/2 columns and last Z/2 columns of the matrix, the channel processing module 902 is further configured to center channels in the first Z/2 columns and the last Z/2 columns of the matrix.

In a possible implementation, the antenna channel allocation apparatus further includes:

a baseband signal processing module 903, configured to calculate a pilot transmission weight value of a first beam in a middle column with Y channels, where the pilot transmission weight value of the first beam meets: beamforming effect, implemented based on the pilot transmission weight value of the first beam, of a two-dimensional codebook-based beam is optimally close to beamforming effect implemented when the quantity of vertical channels is 2, where the baseband signal processing module 903 is further configured to separately calculate pilot transmission weight values of other Y-1 beams in the middle column based on the first pilot transmission weight value; and
the baseband signal processing module 903 is further configured to calculate pilot transmission weight values of a side column with Y-n channels based on pilot transmission weight values of the middle column, where the pilot transmission weight values of the side column meet: beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

This application further provides a wireless communication antenna, including an antenna array, where radio frequency channels on the antenna array are arranged based on the method shown in FIG. 4A and FIG. 4B.

Further, a total quantity of antenna elements connected to each column of the antenna array is the same.

It may be understood that a series of electromagnetic wave sources, referred to as elements or antenna units, are arranged in an antenna, and a quantity of antenna elements in each column is fixed. If it is assumed that a quantity of vertical channels in a middle column is b, a quantity of vertical channels in a side column is a, where b>a, a quantity of antenna elements connected to each channel in the middle column is x, and a quantity of antenna elements connected to each channel in the side column is y, a*x=b*y needs to be met.

An embodiment of this application further provides a computer program product including instructions. When the computer program product runs on a computer, the computer is enabled to perform the communication method in the embodiment shown in FIG. 4A and FIG. 4B.

An embodiment of this application further relates to a computer-readable storage medium, including a computer program or instructions stored in the computer-readable storage medium. When the computer program or the instructions are executed by one or more computers, the steps of the method in the embodiment shown in FIG. 4A and FIG. 4B are implemented.

An embodiment of this application further relates to a computer program product including instructions. When the computer program product runs on a computer, the computer is enabled to perform the steps of the method in the embodiment shown in FIG. 4A and FIG. 4B.

An embodiment of this application further relates to a chip apparatus. The chip system includes a processor, configured to support an antenna channel allocation apparatus in implementing functions of the method in the embodiment shown in FIG. 4A and FIG. 4B, for example, generating or processing data and/or information in the foregoing method. In a possible design, the chip system further includes a memory. The memory is configured to store program instructions and data that are necessary for the antenna channel allocation apparatus, to implement a function of the method in the embodiment shown in FIG. 4A and FIG. 4B. The chip system may include a chip, or may include a chip and another discrete device.

Method or algorithm steps described in combination with the content disclosed in this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (Electrically Erasable Programmable Read-Only Memory, EEPROM), a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (Application-Specific Integrated Circuit, ASIC). In addition, the ASIC may be located in a terminal.

Method or algorithm steps described in combination with the content disclosed in this application may be implemented by hardware, or may be implemented by a processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal.

It may be clearly understood by a person skilled in the art that, for the purpose of convenient and brief description, for a detailed working process of the foregoing described system, apparatus, and unit, reference may be made to a corresponding process in the foregoing method embodiments. Details are not described herein again.

In the several embodiments provided in this application, it should be understood that the disclosed systems, apparatuses, and methods may be implemented in other manners. For example, the foregoing described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

**1.** An antenna channel allocation method, applied to a wireless communication system, comprising:

obtaining an effective antenna array aperture and a system operating wavelength;
calculating, based on the system operating wavelength, a quantity X of horizontal channels that are within a range of the effective antenna array aperture and that conform to a half-wavelength principle, wherein X is an integer greater than 2;
obtaining a quantity of available channels of the system;
dividing the quantity of available channels by the quantity of horizontal channels and then performing rounding up, to obtain a quantity Y of vertical channels;
arranging a matrix whose quantity of channels in a horizontal direction is X and whose quantity of channels in a vertical direction is Y, and calculating a product of X and Y, to obtain a quantity of required channels;
if the quantity of required channels is equal to the quantity of available channels, allocating the antenna channels based on the $X \times Y$ matrix; or
if the quantity of required channels is greater than the quantity of available channels, calculating a difference between the quantity of required channels and the quantity of available channels, to obtain a quantity T of vacant channels;
if T is an odd number, increasing the quantity of vertical channels by 1, and recalculating the quantity of required channels; or

dividing the quantity of vacant channels into Z groups, wherein each group comprises n channels, Z is an even number greater than 0 and less than X, and n is a natural number; and

deducting n channels separately from first Z/2 columns and last Z/2 columns of the matrix.

2. The method according to claim 1, wherein the obtaining an effective antenna array aperture and a system operating wavelength specifically comprises:

obtaining the effective antenna array aperture and a system operating frequency; and

dividing a speed of light by the system operating frequency, to obtain the system operating wavelength.

3. The method according to claim 1 or 2, wherein the calculating, based on the system operating wavelength, a quantity X of horizontal channels that are within a range of the effective antenna array aperture and that conform to a half-wavelength principle specifically comprises:

dividing the effective antenna array aperture by a half of the system operating wavelength and then performing rounding, to obtain the quantity X of horizontal channels.

4. The method according to any one of claims 1 to 3, wherein after the deducting n channels separately from first Z/2 columns and last Z/2 columns of the matrix, the method further comprises:

centering channels in the first Z/2 columns and the last Z/2 columns of the matrix.

5. The method according to any one of claims 1 to 4, further comprising:

calculating a pilot transmission weight value of a first beam in a middle column with Y channels, wherein the pilot transmission weight value of the first beam meets: beamforming effect, implemented based on the pilot transmission weight value of the first beam, of a two-dimensional codebook-based beam is optimally close to beamforming effect implemented when the quantity of vertical channels is 2;

separately calculating pilot transmission weight values of other Y-1 beams in the middle column based on the first pilot transmission weight value; and

calculating pilot transmission weight values of a side column with Y-n channels based on pilot transmission weight values of the middle column, wherein the pilot transmission weight values of the side column meet: beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

6. An antenna channel allocation apparatus, comprising:

a transceiver module, configured to obtain an effective antenna array aperture and a system operating wavelength; and

a channel processing module, configured to calculate, based on the system operating wavelength, a quantity X of horizontal channels that are within a range of the effective antenna array aperture and that conform to a half-wavelength principle, wherein X is an integer greater than 2, wherein

the transceiver module is further configured to obtain a quantity of available channels of the system;

the channel processing module is further configured to divide the quantity of available channels by the quantity of horizontal channels and then perform rounding up, to obtain a quantity Y of vertical channels;

the channel processing module is further configured to arrange a matrix whose quantity of channels in a horizontal direction is X and whose quantity of channels in a vertical direction is Y, and calculate a product of X and Y, to obtain a quantity of required channels;

if the quantity of required channels is equal to the quantity of available channels, the channel processing module is further configured to allocate the antenna channels based on the X×Y matrix; or

if the quantity of required channels is greater than the quantity of available channels, the channel processing module is further configured to calculate a difference between the quantity of required channels and the quantity of available channels, to obtain a quantity T of vacant channels;

if T is an odd number, the channel processing module is further configured to increase the quantity of vertical channels by 1, and recalculate the quantity of required channels; or

the channel processing module is further configured to divide the quantity of vacant channels into Z groups, wherein each group comprises n channels, Z is an even number greater than 0 and less than X, and n is a natural number; and

the channel processing module is further configured to deduct n channels separately from first Z/2 columns and last Z/2 columns of the matrix.

7. The apparatus according to claim 6, further comprising:

a baseband signal processing module, configured to calculate a pilot transmission weight value of a first beam in a middle column with Y channels, wherein the pilot transmission weight value of the first beam meets: beamforming effect, implemented based on the pilot transmission weight value of the first beam, of a two-dimensional codebook-based beam is optimally close to beamforming effect implemented when the quantity of vertical channels is 2, wherein
the baseband signal processing module is further configured to separately calculate pilot transmission weight values of other Y-1 beams in the middle column based on the first pilot transmission weight value; and
the baseband signal processing module is further configured to calculate pilot transmission weight values of a side column with Y-n channels based on pilot transmission weight values of the middle column, wherein the pilot transmission weight values of the side column meet: beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam.

8. A wireless communication antenna, comprising an antenna array, wherein radio frequency channels on the antenna array are arranged based on the method according to any one of claims 1 to 5.

9. The wireless communication antenna according to claim 8, wherein a total quantity of antenna elements connected to each column of the antenna array is the same.

10. A computer-readable storage medium, wherein the computer-readable storage medium stores a computer program, and when the computer program is executed by a communication apparatus, the communication apparatus is enabled to perform the method according to any one of claims 1 to 5.

11. A computer program product, comprising a program, wherein when the program is executed by a processor, the method according to any one of claims 1 to 5 is implemented.

FIG. 1

FIG. 2

FIG. 3

Obtain an effective antenna array aperture and a system operating wavelength /401

Calculate, based on the system operating wavelength, a quantity X of horizontal channels that are within a range of the effective antenna array aperture and that conform to a half-wavelength principle, where X is an integer greater than 2 /402

Obtain a quantity of available channels of the system /403

Divide the quantity of available channels by the quantity of horizontal channels and then perform rounding up, to obtain a quantity Y of vertical channels /404

Arrange a matrix whose quantity of channels in a horizontal direction is X and whose quantity of channels in a vertical direction is Y, and calculate a product of X and Y, to obtain a quantity of required channels /405

Is the quantity of required channels greater than the quantity of available channels?

No → Allocate the antenna channels based on the X×Y matrix /406

Yes

Calculate a difference between the quantity of required channels and the quantity of available channels, to obtain a quantity T of vacant channels /407

Increase the quantity of vertical channels by 1, and recalculate the quantity of required channels

/408 Is T an odd number?

Yes

No

~
TO
FIG. 4B

FIG. 4A

21

CONT.
FROM
FIG. 4A
~

Divide the quantity of vacant channels into Z groups, where each group includes n channels, Z is an even number greater than 0 and less than X, and n is a natural number — 409

Deduct n channels separately from first Z/2 columns and last Z/2 columns of the matrix — 410

Calculate a pilot transmission weight value of a first beam in a middle column with Y channels, where the pilot transmission weight value of the first beam meets: Beamforming effect, implemented based on the pilot transmission weight value of the first beam, of a two-dimensional codebook-based beam is optimally close to beamforming effect implemented when the quantity of vertical channels is 2 — 411

Separately calculate pilot transmission weight values of other Y–1 beams in the middle column based on the first pilot transmission weight value — 412

Calculate pilot transmission weight values of a side column with Y–n channels based on pilot transmission weight values of the middle column, where the pilot transmission weight values of the side column meet: Beamforming effect, implemented based on the pilot transmission weight values of the side column, of the two-dimensional codebook-based beam is optimally close to beamforming effect, implemented based on the pilot transmission weight values of the middle column, of the two-dimensional codebook-based beam — 413

FIG. 4B

FIG. 5

FIG. 6

FIG. 7

**EP 4 580 077 A1**

FIG. 8

FIG. 9

24

FIG. 10

## INTERNATIONAL SEARCH REPORT

| International application No. |
| --- |
| **PCT/CN2023/125938** |

| A. | CLASSIFICATION OF SUBJECT MATTER |
| --- | --- |

H04B 7/0404(2017.01)i

According to International Patent Classification (IPC) or to both national classification and IPC

| B. | FIELDS SEARCHED |
| --- | --- |

Minimum documentation searched (classification system followed by classification symbols)

IPC: H04B，H04W

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 天线, 通道, 波束, 链路, 路径, 口径, 波长, 半波长, 水平, 垂直, 矩阵, 频点, 频率, 自由度, 权值, 权重, antenna, path, route, link, caliber, wavelengh, half wavelengh, plane, matrix, frequency, freedom, weighting

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2018137183 A1 (HUAWEI TECHNOLOGIES CO., LTD.) 02 August 2018 (2018-08-02) description, pages 8-17 | 1-11 |
| A | CN 105514566 A (THE 10TH RESEARCH INSTITUTE OF CHINA ELETRONIC TECHNOLOGY GROUP CORPORATION) 20 April 2016 (2016-04-20) entire document | 1-11 |
| A | CN 111181613 A (CHINA MOBILE GROUP DESIGN INSTITUTE CO., LTD. et al.) 19 May 2020 (2020-05-19) entire document | 1-11 |
| A | CN 113099534 A (NORTHWESTERN POLYTECHNIC UNIVERSITY) 09 July 2021 (2021-07-09) entire document | 1-11 |
| A | US 2020329509 A1 (JALALI, A. et al.) 15 October 2020 (2020-10-15) entire document | 1-11 |
| A | InterDigital. "R1-140655, Initial Baseline Results for 3D Channel Model" *3GPP TSG RAN WG1 Meeting #76*, 01 February 2014 (2014-02-01), pages 1-4 | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 December 2023** | **22 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/125938**

| Patent document cited in search report | | | Publication date (day/month/year) | Patent family member(s) | | | Publication date (day/month/year) |
|---|---|---|---|---|---|---|---|
| WO | 2018137183 | A1 | 02 August 2018 | US | 2019349050 | A1 | 14 November 2019 |
| | | | | EP | 3565128 | A1 | 06 November 2019 |
| | | | | EP | 3565128 | A4 | 15 January 2020 |
| | | | | WO | 2018137183 | A9 | 25 July 2019 |
| CN | 105514566 | A | 20 April 2016 | CN | 105514566 | A | 20 April 2016 |
| CN | 111181613 | A | 19 May 2020 | None | | | |
| CN | 113099534 | A | 09 July 2021 | None | | | |
| US | 2020329509 | A1 | 15 October 2020 | US | 11304238 | B2 | 12 April 2022 |
| | | | | US | 2021392558 | A1 | 16 December 2021 |
| | | | | US | 11382139 | B2 | 05 July 2022 |
| | | | | US | 2021392689 | A1 | 16 December 2021 |
| | | | | WO | 2021252727 | A1 | 16 December 2021 |
| | | | | US | 2021392688 | A1 | 16 December 2021 |
| | | | | US | 11503649 | B2 | 15 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211365539